# EUROPÄISCHE PATENTSCHRIFT

(11) **EP 0 423 562 B1**
(45) Veröffentlichungstag und Bekanntmachung des Hinweises auf die Patenterteilung: **21.06.1995**
(21) Anmeldenummer: 90119137.9
(22) Anmeldetag: 05.10.1990
(51) Int. Cl.: C08G 64/06

(54) **Polycarbonate mit verbesserter Wärmeformbeständigkeit**
Polycarbonates with improved dimensional stability under heat
Polycarbonates ayant une stabilité dimensionnelle à chaud plus élevée

(30) Priorität: 18.10.1989 DE 3934712
(43) Veröffentlichungstag der Anmeldung: 24.04.1991
(73) Patentinhaber: BAYER AG, 51368 Leverkusen (DE)
(72) Erfinder: Westeppe, Uwe, Dr., W-4020 Mettmann (DE); Buysch, Hans-Josef, Dr., W-4150 Krefeld (DE); Grigo, Ulrich, Dr., W-4152 Kempen 3 (DE); Berg, Klaus, Dr., W-4150 Krefeld (DE)

(56) Entgegenhaltungen:
- DE-A- 3 804 988
- DE-A- 3 832 396

## Beschreibung

Gegenstand der vorliegenden Erfindung ist die Verwendung des Diphenols der Formel (I) 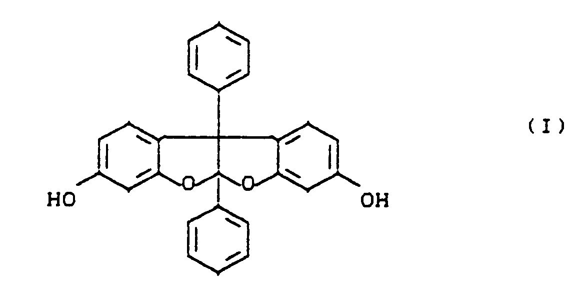
zur Herstellung von hochmolekularen, thermoplastischen, aromatischen Polycarbonaten gemäß Anspruch 1.

Die Dihydroxyverbindung der Formel (I) ist bekannt (vgl. J. Am. Chem. Soc. 63, 580 (1941) (Struktur dort falsch zugeordnet), Rec. Trav. Chim. 87, 599 (1968), DE-A-3 804 988 und EP-A-314 007); sie wird durch Kondensation von Benzil mit Resorcin in Gegenwart saurer Katalysatoren (Schwefelsäure, saure Kationenaustauscherharze) hergestellt.

Es wurde nun überraschenderweise gefunden, das sich die Dihydroxyverbindung (I) insbesondere zur Herstellung von hochmolekularen, thermoplastischen Polycarbonaten, die sich durch hohe Wärmeformbeständigkeit in Kombination mit einem guten sonstigen Eigenschaftsbild auszeichnen, eignet.

Es kann sowohl das Diphenol der Formel (I) alleine unter Bildung von Homopolycarbonaten als auch im Gemisch mit anderen Diphenolen, beispielsweise mit denen der Formel

HO-Z-OH (II),

zur Herstellung von hochmolekularen, thermoplastischen, aromatischen Polycarbonaten verwendet werden.

Geeignete andere Diphenole der Formel

HO-Z-OH (II)

sind solche, in denen Z ein aromatischer Rest mit 6 bis 30 C-Atomen ist, der einen oder mehrere aromatische Kerne enthalten kann, substituiert sein kann und aliphatische Reste oder cycloaliphatische Reste oder andere heterocyclische Reste als die der Formel (I) oder Heteroatome als Brückenglieder enthalten kann.

Beispiele für Diphenole der Formel (II) sind
Hydrochinon,
Resorcin,
Dihydroxydiphenyle, Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis-(hydroxyphenyl)-diisopropylbenzole sowie deren kernalkylierte und kernhalogenierte Verbindungen.

Diese und weitere geeignete andere Diphenole sind z.B. in den US-A-3 028 365, 2 999 835, 3 148 172, 3 275 601, 2 991 273, 3 271 367, 3 062 781, 2 970 131 und 2 999 846, in den DE-A-1 570 703, 2 063 050, 2 063 052, 2 211 956 und 3 832 396 (=EP-A-359953), in der FR-A-1 561 518 und in der Monographie "H. Schnell, Chemistry and Physics of Polycarbonates, Interscience Publishers, New York 1964", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
1,1-Bis-(4-hydroxyphenyl-3,3,5-trimethylcyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte andere Diphenole der Formel (II) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan,
1,1-Bis-(4-hydroxyphenyl)-3,3,5-trimethylcyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von erfindungsgemäß zu verwendendem Diphenol der Formel (I) zu den gegebenenfalls mitzuverwendenden anderen Diphenolen, beispielsweise denen der Formel (II), liegt zwischen 100 Mol-% (I) zu 0 Mol-% anderem Diphenol und 15 Mol-% (I) zu 85 Mol-% anderem Diphenol und besonders zwischen 100 Mol-% (I) zu 0 Mol-% anderem Diphenol und 20 Mol-% (I) zu 80 Mol-% anderem Diphenol.

Die hochmolekularen Polycarbonate aus dem erfindungsgemäßen Diphenol der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Gegenstand der vorliegenden Erfindung ist somit auch ein Verfahren gemäß Anspruch 2 zur Herstellung von hochmolekularen thermoplastischen, aromatischen Polycarbonaten aus Diphenolen, gegebenenfalls Kettenabbrechern und gegebenenfalls Verzweigern nach den bekannten Methoden der Polycarbonatherstellung, vorzugsweise nach dem Zweiphasengrenzflächenverfahren, das dadurch gekennzeichnet ist, daß man als Diphenole das der Formel (I) in Mengen von
100 Mol-% bis 15 Mol-% und besonders
100 Mol-% bis 20 Mol-%, bezogen jeweils auf die Gesamtmolmenge an eingesetzten Diphenolen, und gegebenenfalls andere Diphenole in bis zu 100 Mol-%, bezogen auf Gesamtdiphenolmenge, komplementären Mengen, verwendet.

Als Verzweiger dienen, falls benutzt, in bekannter Weise geringe Mengen, vorzugsweise Mengen zwischen 0,05 und 2,0 Mol-% (bezogen auf Mole eingesetzte Diphenole), an drei oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind Phloroglucin,
4,6-Dimethyl-2,4-6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthal-säureester,
Tetra-(4-hydroxyphenyl)-methan,
Tetra-(4-(4-hydroxyphenyl-isopropyl)-phenoxy)-methan und
1,4-Bis-(4′-,4˝-dihydroxytriphenyl)-methyl)-benzol.

Einige der sonstigen dreifunktionellen Verbindungen sind 2,4-Bihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur Regelung des Molekulargewichts dienen in bekannter Weise monofunktionelle Verbindungen in üblichen Konzentrationen. Geeignete Verbindungen sind z.B. Phenol, tert.-Butylphenole oder andere Alky-C₁-C₇-substituierte Phenole. Zur Regelung des Molekulargewichts sind insbesondere kleine Mengen Phenole der Formel (III) geeignet 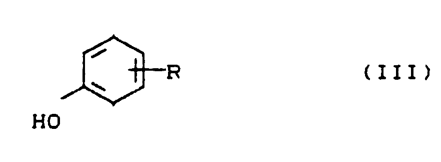
worin R einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf Mole eingesetzte Diphenole, eingesetzt.

Die erfindungsgemäßen Polycarbonate können vorzugsweise nach dem Phasengrenzflächenverfahren (vgl. H. Schnell, "Chemistry and Physics of Polycarbones", Polymer Reviews, Vol. IX, Seite 33 ff., Interscience Publ., 1964) in an sich bekannter Weise hergestellt werden. Hierbei wird das Diphenol der Formel (I) in wäßrig alkalischer Phase gelöst, wobei die Alkalimenge bevorzugt so gewählt wird, das die wäßrige Phase einen pH-Wert von 8 bis 10,5, bevorzugt 9 bis 10, aufweist. Nach Zugabe des organischen Lösungsmittels wird mit einem Carbonatspender (Phosgen) umgesetzt. Gegen Ende der Phosgen-Zugabe wird ein pH-Wert >11 eingestellt.

Zur Herstellung von Co-Polycarbonaten werden Gemische des Diphenols der Formel (I) und anderer Diphenole, beispielsweise diejenigen der Formel (II), eingesetzt.

Zur Regelung des Molekulargewichtes können Kettenabbrecher z.B. der Formel (III) zugegeben werden.

Danach wird, wie bereits erwähnt, in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitzuverwendenden 0,05 bis 2 Mol-% an Verzweigern können entweder mit den Diphenolen in der wäßrig alkalischen Phase vorgelegt werden oder in dem organischen Lösungsmittel, gelöst vor der Phosgenierung, zugegeben werdend

Neben dem einzusetzenden Diphenol der Formel (I) sowie den anderen Diphenolen (II) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach Molen Diphenolat-Struktureinheiten von(I) und gegebenenfalls von den anderen Diphenolen, wie beispielsweise von (II); ebenso kann bei Einsatz von Chlorkohlensäureestern die Phosgenmenge in bekannter Weise entsprechend reduziert werden.

Geeignete organische Lösungsmittel für die Lösung der Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der erfindungsgemäßen Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Isolierung der erfindungsgemäßen Polycarbonate erfolgt in bekannter Weise.

Die erfindungsgemäßen hochmolekularen, thermoplastischen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden. Auch hier werden die erfindungsgemäßen Polycarbonate in bekannter Weise isoliert.

Die nach dem erfindungsgemäßen Verfahren erhältlichen Polycarbonate haben Molekulargewichte Mw (Gewichtsmittel, ermittelt durch Gelchromatographie nach vorheriger Eichung) von mindestens 10.000, besonders bevorzugt von 12.000 bis 250.000 und insbesondere von 20.000 bis 100.000. Sie können linear oder verzweigt sein, sie sind Homopolycarbonate oder Copolycarbonate auf Basis des Diphenols der Formel (I).

Gegenstand der vorliegenden Erfindung sind somit auch lineare oder verzweigte, hochmolekulare, thermoplastische, aromatische Polycarbonate gemäß Anspruch 4 mit Mw (Gewichtsmittelmolekulargewichten) von mindestens 10.000, vorzugsweise von 12.000 bis 250.000 und insbesondere von 20.000 bis 100.000, erhältlich nach dem erfindungsgemäßen Verfahren.

Diese hochmolekularen, thermoplastischen, aromatischen Polycarbonate mit Mw (Gewichtsmittelmolekulargewichten) von mindestens 10.000, vorzugsweise von 12.000 bis 250.000 und insbesondere von 20.000 bis 100.000, enthalten die bifunktionellen Carbonatstruktureinheiten der Formel (Ia) 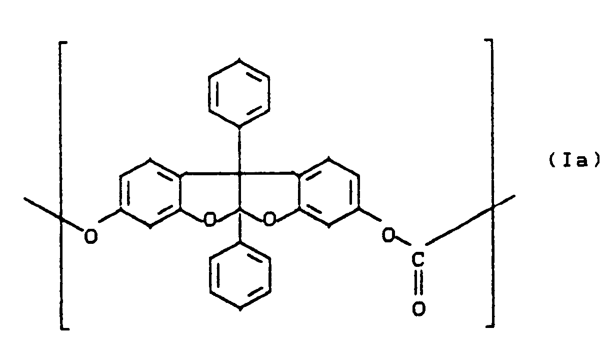
in Mengen von 100 Mol-% bis 15 Mol-% und besonders 100 Mol-% bis 20 Mol-%, bezogen jeweils auf die Gesamtmenge von 100 Mol-% an difunktionellen Carbonatstruktureinheiten im Polycarbonat.

Die erfindungsgemäßen Polycarbonate enthalten somit jeweils zu 100 Mol-% komplementäre Mengen an anderen difunktionellen Carbonatstruktureinheiten, beispielsweise solche der Formel (IIa), 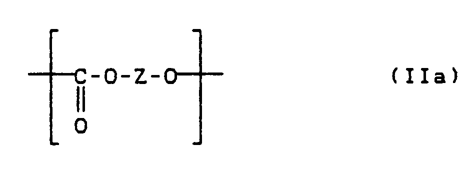
worin Z ein aromatischer Rest mit 6 bis 30 C-Atomen ist, also in Mengen von 0 Mol-% (einschließlich) bis bis 85 Mol-% und bevorzugt 0 Mol-% bis 80 Mol-%, bezogen jeweils auf die Gesamtmenge von 100 Mol-% an difunktionellen Carbonatstruktureinheiten im erfindungsgemäßen Polycarbonat.

Es hat sich nun überraschenderweise gezeigt, daß wie bereits erwähnt, durch den erfindungsgemäßen Einbau des Diphenols der Formel (I) neue Polycarbonate mit hoher Wärmeformbeständigkeit erhalten werden, die auch sonst ein gutes Eigenschaftsbild haben. Diese Polycarbonate auf Basis des Diphenols der Formel (I) besitzen zur hohen Wärmeformbeständigkeit gutes Fließverhalten, insbesondere unter Berücksichtigung der hohen Wärmeformbeständigkeit, gutes FR-Verhalten, außerdem eine gute Hydrolyse-Stabilität und ein gutes Wärmealterungsverhalten, was nicht zu erwarten war.

Durch die Kombination mit anderen Diphenolen, insbesondere mit denen der Formel (II) lassen sich zudem die Polycarbonateigenschaften in günstiger Weise variieren.

Die Isolierung der nach dem erfindungsgemäßen Verfahren erhältlichen Polycarbonate geschieht in bekannter Weise, indem man die bei Phasengrenzflächenverfahren erhaltene organische Phase abtrennt, neutral und elektrolytfrei wäscht und dann beispielsweise über einen Eindampfextruder als Granulat isoliert oder aus einer Lösung das Polycarbonat durch Fällung isoliert.

Den erfindungsgemäßen Polycarbonaten können noch vor oder nach ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugesetzt werden.

Im einzelnen können beispielsweise Ruß, Kieselgut, Kaolin, Tone, CaF₂, CaCO₃, Aluminiumoxide, Graphit, Glasfasern und organische und anorganische Pigmente sowohl als Füllstoffe als auch als Nucleierungsmittel zugesetzt werden, sowie als Entformungsmittel beispielsweise Glycerinstearate, Pentaerythrittetrastearat und Trimethylolpropentristearat.

Die erfindungsgemäßen Polycarbonate können zu Formkörpern verarbeitet werden, indem man beispielsweise die in bekannter Weise isolierten Polycarbonate zu Granulat extrudiert und dieses Granulat gegebenenfalls nach Zusatz der obengenannten Additive durch Spritzguß zu verschiedenen Artikeln in bekannter Weise verarbeitet.

Die erfindungsgemäßen Polycarbonate sind als Formkörper überall dort einsetzbar, wo die bislang bekannten Polycarbonate eingesetzt wurden, also im Elektrosektor sowie im Bausektor für Abdeckungen und Verglasungen, und zwar dann, wenn erhöhte Wärmeformbeständigkeit bei gleichzeitig guter Verarbeitbarkeit, also wenn komplizierte Bauteile hoher Wärmeformbeständigkeit verlangt werden.

In den nachfolgenden Beispielen wird die relative Viskosität gemessen an 0,5 gew.-%iger Lösung des Polycarbonats in CH₂Cl₂.

Die Einfriertemperatur oder Glastemperatur wird gemessen durch Differential Scanning Calorimetry (DSC).

### Beispiel 1

39,4 g (0,1 Mol) des Diphenols (I), 8,0 g (0,2 Mol) NaOH und 300 g Wasser werden in einer Inertgas-Atmosphäre unter Rühren gelöst. Dann fügt man eine Lösung von 0,188 g (2 Mol-%) Phenol in 400 ml Methylenchlorid zu. In die gut gerührte Lösung wurden bei pH 10 und 21 bis 25°C 19,8 g (0,2 Mol) Phosgen eingeleitet, wobei der pH-Wert durch Zugabe von 35,6 g 45 %iger Natronlauge zwischen 9 - 10 gehalten wird. Die restliche Natronlaugemenge wird nach Ende des Einleitens zugegeben. 5 Minuten nach Beendigung der Phosgeneinleitung wrden 0,7 ml Ethylpyridin zugegeben und noch 45 Minuten gerührt. Die bisphenolatfreie wäßrige Phase wird abgetrennt, die organische Phase nach Ansäuern mit Phosphorsäure mit Wasser gewaschen und vom Lösungsmittel befreit. Das Polycarbonat zeigt eine relative Lösungsviskosität von 1,145.

Die Glastemperatur des Polymers wurde zu 293°C bestimmt (DSC). Die thermogravimetrische Analyse ergab bei 430°C nur einen Gewichtsverlust von 20 %.

### Beispiel 2

18,3 g (0,08 Mol) Bisphenol A (2,2-Bis-(4-hydroxyphenyl)-propan, 7,9 g (0,02 Mol) Diphenol (I), 8,0 g (0,2 Mol) NaOH und 331 g Wasser werden in einer Inertgas-Atmosphäre unter Rühren gelöst. Dann fügt man eine Lösung von 0,235 g Phenol in 248 ml Methylenchlorid zu.

In die gut gerührte Lösung wird bei 22 bis 24°C 19,8 g (0,2 Mol) Phosgen eingeleitet, wobei der pH-Wert durch Zugabe von 35,6 g 45 %iger Natronlauge zwischen 9 - 10 gehalten wird. Die restliche Natronlaugemenge wird nach Ende des Einleitens zugegeben. Danach wird 0,7 ml Ethylpiperidin zugegeben und noch 45 Min. bei pH 13 gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,343.

Die Glastemperatur des Polymers wurde zu 180°C bestimmt (DSC).

### Beispiel 3

Wie in Beispiel 2 wurde eine Mischung aus 11,4 g (0,05 Mol) Bisphenol A und 19,7 g (0,05 Mol) Diphenol (I) zum Polycarbonat umgesetzt.

Das Polycarbonat zeigte eine relative Lösungsviskosität von 1,387.

Die Glastemperatur des Polymers wurde zu 233°C bestimmt (DSC).

### Beispiel 4

Wie in Beispiel 2 wurde eine Mischung aus 6,8 g (0,03 Mol) Bisphenol A und 27,6 g (0,07 Mol) Diphenol (I) unter Zugabe von 426 g Wasser und 320 ml Methylenchlorid zum Polycarbonat umgesetzt.

Das Polycarbonat zeigte eine relative Lösungsviskosität von 1,395.

Die Glastemperatur des Polymers wurde zu 258°C bestimmt (DSC).

## Patentansprüche

1. Verwendung des Diphenols der Formel (I) zur Herstellung von hochmolekularen, thermoplastischen aromatischen Polycarbonaten mit Mw (Gewichtsmittel molekulargewicht) von mindestens 10 000 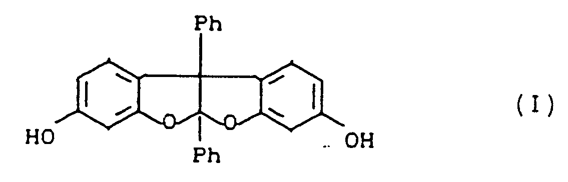 in Mengen von 100 Mol % bis 15 Mol %, bezogen jeweils auf die Gesamtmolmenge an eingesetzten Diphenolen.

2. Verfahren zur Herstellung von hochmolekularen, thermoplastischen, aromatischen Polycarbonaten mit Mw (Gewichtsmittelmolekulargewicht) von mindestens 10 000 aus Diphenolen, gegebenenfalls Kettenabbrechern und gegebenenfalls Verzweigern nach den bekannten Methoden der Polycarbonatherstellung, dadurch gekennzeichnet, daß man als Diphenole das der Formel (I) des Anspruchs 1 in Mengen von 100 Mol-% bis 15 Mol-%, bezogen jeweils auf die Gesamtmolmenge an eingesetzten Diphenolen, verwendet.

3. Verfahren nach Anspruch 2, dadurch gekennzeichnet, daß die Herstellung der Polycarbonate nach dem Zweiphasengrenzflächenverfahren erfolgt und der pH-Wert bei der Phosgenzugabe zwischen 8 und 10,5 liegt, anschließend auf einen pH-Wert >11 eingestellt wird.

4. Hochmolekulare, thermoplastische, aromatische Polycarbonate mit Mw (Gewichtsmittelmolekulargewichten) von mindestens 10.000, erhältlich nach dem Verfahren des Anspruchs 2.

5. Polycarbonate gemäß Anspruch 4, dadurch gekennzeichnet, daß sie zu 100 Mol-% komplementäre Mengen an anderen difunktionellen Carbonatstruktureinheiten der Formel (IIa) 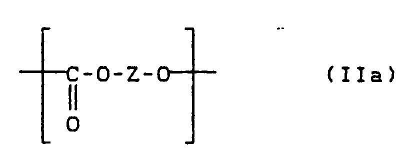 enthalten, worin Z ein aromatischer Rest mit 6 bis 30 C-Atomen ist.

6. Polycarbonate gemäß Anspruch 5, dadurch gekennzeichnet, daß (IIa) aus dem 2,2-Bis-(4-hydroxyphenyl)-propan aufgebaut ist.

## Claims

1. The use the diphenol corresponding to formula (I): 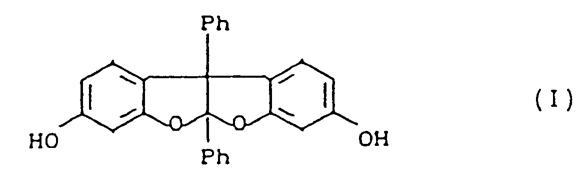 in quantities of 100 mole-% to 15 mole-%, based on the total molar quantity of diphenols used, for the production of high molecular weight, thermoplastic, aromatic polycarbonates with an Mw (weight average molecular weight) of at least 10,000.

2. A process for the production of high molecular weight, thermoplastic, aromatic polycarbonates with an Mw (weight average molecular weight) of at least 10,000 from diphenols, optionally chain terminators and optionally branching agents by known methods for the production of polycarbonates, characterized in that the diphenol corresponding to formula (I) in claim 1 is used as the diphenol in quantities of 100 mole-% to 15 mole-%, based on the total molar quantity of diphenols used.

3. A process as claimed in claim 2, characterized in that the polycarbonates are produced by the two-phase interfacial method and the pH value is adjusted to a value in the range from 8 to 10.5 during the introduction of phosgene and subsequently to a value of > 11.

4. High molecular weight, thermoplastic, aromatic polycarbonates having weight average molecular weights (Mw) of at least 10,000 obtainable by the process claimed in claim 2.

5. Polycarbonates as claimed in claim 4, characterized in that they contain quantities complementary to 100 mole-% of other difunctional carbonate structural units corresponding to formula (IIa): 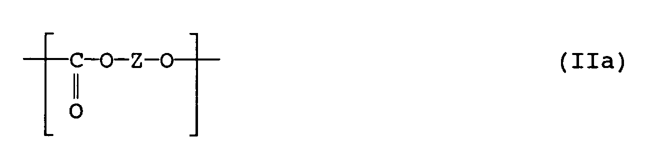 in which Z is an aromatic C₆₋₃₀ radical.

6. Polycarbonates as claimed in claim 5, characterized in that (IIa) is synthesized from 2,2-bis-(4-hydroxyphenyl)-propane.

## Revendications

1. Utilisation du diphénol de formule (I) : 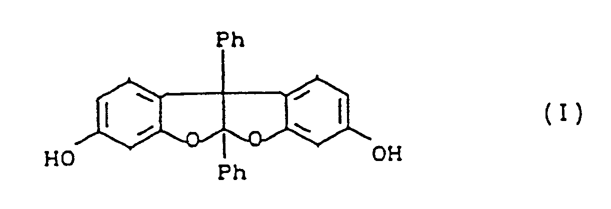 pour préparer des polycarbonates aromatiques thermoplastiques à poids moléculaire élevé, ayant un Mₚ (poids moléculaire moyen en poids) valant au moins 10 000 et que l'on utilise en des quantités de 100 mol % à 15 mol %, quantités rapportées à chaque fois à la quantité totale des diphénols mis en oeuvre.

2. Procédé pour préparer des polycarbonates aromatiques thermoplastiques à poids moléculaire élevé, ayant un Mₚ (poids moléculaire moyen en poids) valant au moins 10 000, à partir de diphénols, éventuellement d'agents de rupture des chaînes et éventuellement d'agents de ramification, selon les procédés connus de production de polycarbonate, procédé caractérisé en ce qu'on utilise comme diphénols le diphénol de formule (I) de la revendication 1, pris en des quantités de 100 mol % à 15 mol %, ces quantités étant rapportées à chaque fois à la quantité molaire totale des diphénols mis en oeuvre.

3. Procédé selon la revendication 2, caractérisé en ce que la préparation des polycarbonates a lieu selon le procédé fonctionnant sur les surfaces limites de deux phases et en ce que la valeur du pH se situe lors de l'addition du phosgène entre 8 et 10,5 et l'on ajuste ensuite le mélange à une valeur de pH supérieure à 11.

4. Polycarbonates aromatiques thermoplastiques à poids moléculaire élevé, ayant un Mₚ (poids moléculaire moyen en poids) valant au moins 10 000, que l'on peut obtenir selon le procédé de la revendication 2.

5. Polycarbonates selon la revendication 4, caractérisés en ce qu'ils contiennent jusqu'à 100 mol % de quantités complémentaires d'autres motifs structurels carbonates difonctionnels répondants à la formule (IIa) : 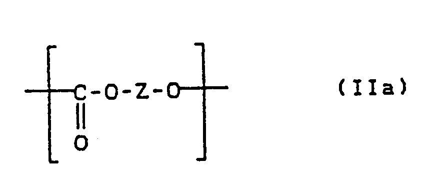 formule dans laquelle Z représente un reste aromatique ayant 6 à 30 atomes de carbone.

6. Polycarbonates selon la revendication 5, caractérisés en ce que le motif (IIa) est formé à partir du 2,2-bis-(4-hydroxyphényl)-propane.
